Europäisches Patentamt

European Patent Office

Office européen des brevets

(19)

(11) Veröffentlichungsnummer: **0 073 389**
**B1**

(12) **EUROPÄISCHE PATENTSCHRIFT**

(45) Veröffentlichungstag der Patentschrift:
**04.12.85**

(21) Anmeldenummer: **82107412.7**

(22) Anmeldetag: **16.08.82**

(51) Int. Cl.⁴: **C 08 G 18/12,** C 08 G 18/32,
C 09 D 3/72, C 14 C 11/00,
D 06 N 3/14

(54) **Beschichtungs- und Zurichtmittel für Leder und Lederaustauschstoffe auf Basis von Polyurethanharnstoff-Beschichtungsmassen.**

(30) Priorität: **28.08.81 DE 3134112**

(43) Veröffentlichungstag der Anmeldung:
**09.03.83 Patentblatt 83/10**

(45) Bekanntmachung des Hinweises auf die Patenterteilung:
**04.12.85 Patentblatt 85/49**

(84) Benannte Vertragsstaaten:
**BE DE FR GB IT NL**

(56) Entgegenhaltungen:
**FR - A - 2 183 274**
**FR - A - 2 352 845**

(73) Patentinhaber: **BAYER AG, Konzernverwaltung RP Patentabteilung, D-5090 Leverkusen 1 Bayerwerk (DE)**

(72) Erfinder: **Pedain, Josef, Dr., Haferkamp 6,
D-5000 Köln 80 (DE)**
Erfinder: **Thoma, Wilhelm, Dr., Birkenweg 25,
D-5090 Leverkusen 3 (DE)**
Erfinder: **Grammel, Jürgen, Dr., Severinstrasse 129,
D-5000 Köln 1 (DE)**
Erfinder: **Schröer, Walter, Dr.,
Nicolai-Hartmann-Strasse 29, D-5090 Leverkusen 1 (DE)**

# 0 073 389

## Beschreibung

Die Erfindung betrifft Beschichtungsmittel für Leder und Lederaustauschstoffe, die einen Polyurethanrohstoff enthalten. Sie dienen zum Beschichten und Zurichten von Leder und Lederaustauschmaterialien aus Lösung. Aufgrund der besonderen Zusammensetzung des Polyurethans erhält man Zurichtungen und Beschichtungen mit erwünschten hochwertigen Eigenschaften, die in der Summe neuartig und unerwartet sind.

Durch eine Beschichtung von Leder oder Kunstleder, die auch als Schlußlackierung, Zurichtung, Appretur oder Finish bezeichnet wird, soll dem Substrat ein bestimmtes Aussehen (Farbton, Glanz), ein bestimmter »Griff« und die Widerstandsfähigkeit gegen äußere Einflüsse verliehen werden.

Die Beschichtung muß deshalb auf dem Substrat gut haften, eine hohe Härte und gute Knickelastizität besitzen und naß- und trockenreibecht sein. Bei Verwendung auf Kunstledern (z. B. auf PVC-Kunstleder), die Weichmacher und/oder Farbstoffe enthalten, soll die Zurichtung die Wanderung von Weichmachern oder Farbstoffen, z. B. organischer Pigmente an die Oberfläche, unbedingt verhindern, denn dadurch werden die beschichteten Artikel auf der Oberfläche klebrig und unansehnlich. Auch wenn ein Artikel aus verschieden gefärbten Teilen besteht, muß die Zurichtung verhindern, daß die organischen Farbstoffe »ausbluten«. Man versteht darunter das Hineinwandern von organischen Farbstoffen aus gefärbten in ungefärbtes oder unterschiedlich gefärbtes Material mit Hilfe von Weichmachern oder Fetten.

Ein weiteres Problem, das bisher nur unbefriedigend mit den bekannten Polyurethan-Zurichtungen gelöst werden konnte, ist die Frage der Lösemittel. Vor allem für die Anwendung von Polyurethanen auf der Basis von aromatischen Diisocyanaten mußten Lösemittel verwendet werden, die für Zurichtungen nicht optimal geeignet sind. Zum Beispiel hat das viel verwendete Dimethylformamid den Nachteil, daß es das Substrat anlöst oder stark anquillt und aufgrund seines hohen Siedepunkts bei Raumtemperatur nur langsam aus dem Zurichtfilm verdampft. Lösungen, die Dimethylformamid enthalten, können das Substrat deshalb stark angreifen oder gar zerstören.

Ein weiteres gebräuchliches Polyurethan-Lösemittel ist Tetrahydrofuran, das aber ebenfalls im Gebrauch in der Lederindustrie Nacheile zeigt:

Es hat einen unangenehmen Geruch und bildet sehr leicht Peroxide, so daß eine Rück- oder Wiedergewinnung durch einen Destillationsvorgang erschwert wird.

Es sind auch bereits aus der DE-A-2 221 798/FR-A-2 183 274 Polyurethanharnstofflösungen auf der Basis (cyclo)aliphatischer Diisocyanate, insbesondere auf der Basis von 1-Isocyanato-3-isocyanato-methyl-3,5,5-trimethylcyclohexan und bestimmten cis/trans-Gemischen von 1,4-Diaminocyclohexan bekannt, welche in relativ leicht flüchtigen, wenig polaren Lösungsmittel(gemische)n wie Toluol/Isopropanol löslich sind. Aus den stabilen Lösungen können relativ lichtechte Überzüge mit wesentlich erhöhten Erweichungsbereichen und Schmelzpunkten erhalten werden, die eine verbesserte Reinigungsbeständigkeit und gute Knick-, Kratz- und Scheuerfestigkeit aufweisen.

Zum Stand der Technik gehören als Beschichtungsmittel auch noch Copolyamide, die in Gemischen von Kohlenwasserstoffen und Alkoholen löslich sind. Mit solchen Produkten lassen sich ebenfalls Zurichtungen mit angenehmen Griff und hoher Diffusionsechtheit herstellen. Diese Zurichtungen haben allerdings den schwerwiegenden Nachteil, daß sie gegen Alkohole, wie z. B. gegen wäßriges Ethanol, sehr empfindlich sind.

Aufgabe der vorliegenden Erfindung ist es, ein für die Zurichtung bzw. Beschichtung von Leder oder Lederaustauschstoffen geeignetes Polyurethan-Einkomponentensystem zur Verfügung zu stellen, das die genannten Nachteile vermeidet und im Vergleich zu bekannten Polyurethan-Zurichtmitteln verbesserte Eigenschaften zeigt. Insbesondere soll das Zurichtmittel eine verbesserte Weichmachersperre darstellen, eine hohe Härte und Knickbeständigkeit haben, dem Substrat einen trockenen angenehmen Griff verleihen und in Lösemitteln wie aromatischen Kohlenwasserstoffen, Ketonen und Alkoholen löslich sein und lagerbeständige Lösungen bilden.

Diese Aufgabe wurde mit Hilfe von Polyurethanharnstoffen gelöst, die aus unterschiedlichen Makrodiolen (als Weichsegmente) mit besonderem Aufbau hergestellt werden.

Es ist bereits bekannt, daß die Verwendung von unterschiedlichen Makrodiolen in Polyurethanen zu einer starken Verbesserung der mechanischen Eigenschaften, insbesondere der Zugfestigkeit führt. So ist z. B. durch die DE-A-2 623 961 ein Verfahren zur Herstellung von Polyurethanen bekannt, wobei unterschiedliche Makrodiole verwendet werden. Das Verfahren verlangt aber getrennt hergestellte NCO-Prepolymere, die erst vor Ausbildung des Polyurethans vermischt werden. Diese dreistufige Verfahrensweise benötigt einen erhöhten Aufwand und ist deshalb von Nachteil. Auch sind die Verfahrensprodukte für die Zurichtung von Leder und Lederaustauschstoffen nicht optimal geeignet.

Gegenstand der Erfindung sind also Beschichtungsmittel und Zurichtmittel für Leder und Lederaustauschstoffe auf der Grundlage von linearen bzw. wenig verzweigten thermoplastischen Polyurethanharnstoffen, die aus Diisocyanaten, Makrodiolen, Kettenverlängerern wie Diaminen und gegebenenfalls aus Triaminen, Diolen und/oder Triolen und gegebenenfalls aus Kettenabbrechern wie Monoalkoholen und Monoaminen aufgebaut sind, dadurch gekennzeichnet, daß man Polyurethanharnstoffe verwendet, die aufgebaut sind

A) aus mindestens 2 Makrodiolen im Molverhältnis 1 : 6 bis 6 : 1, vorzugsweise 1 : 3 bis 3 : 1, von denen das eine

    1. ein mittleres Molekulargewicht von 254 bis 650, vorzugsweise 350 bis 600, hat und mindestens einen Benzolrest, einen Cyclohexan- oder Cyclohexenrest enthält,

    2. und das zweite Makrodiol ein gegenüber dem ersten Makrodiol mindestens dreifaches mittleres Molekulargewicht im Bereich von 1200 bis 3000 besitzt

und die

B) pro Mol Makrodiolgemisch 0,5 bis 11 Mol, vorzugsweise 0,8 bis 7,5 Mol, Kettenverlängerer enthalten, wobei mindestens 50 Mol-% der verwendeten Kettenverlängerer aliphatische und/oder cycloaliphatische Diamine und/oder Hydrazin sind

und bei denen

C) als Diisocyanate in einer Menge von 2—12 Mol C) pro Mol A) cycloaliphatische Diisocyanate eingesetzt werden, welche gegebenenfalls durch bis zu 50 Mol-%, vorzugsweise bis zu 25 Mol-% aliphatische und/oder aromatische Diisocyanate ersetzt sein können.

Die erfindungsgemäßen Zurichtmittel und/oder Beschichtungsmittel für Leder und Lederaustauschstoffe sind hochmolekulare, aber praktisch unvernetzte, thermoplastische Polyurethanharnstoffe, die in Lösung oder in Schmelze hergestellt werden. Sie sind u. a. dadurch charakterisiert, daß sie sich ohne die Mitverwendung von Dimethylformamid, Tetrahydrofuran und anderen aggressiven, hochpolaren Lösungsmitteln anwenden lassen und in leicht verdampfbaren Gemischen von Lösemitteln wie aromatischen Kohlenwasserstoffen und aliphatischen Alkoholen, oder auch reinen Lösungsmitteln auf der Basis von Ketonen wie Aceton, Methylethylketon, Methylisobutylketon, von aromatischen Kohlenwasserstoffen wie Toluol oder Xylol, in Alkoholen wie Methanol, Ethanol, n-Propanol und Isopropanol und in Estern wie Butylacetat und Ethylacetat auflösen und verwendbar sind.

Überraschend und aus der Kenntnis des Standes der Technik nicht herzuleiten ist, daß sich die erfindungsgemäßen Beschichtungsmittel trotz ihrer guten Löslichkeit in »soft solvents« durch hervorragende Abriebfestigkeit, hohe Beständigkeit gegenüber Weichmachern, wobei sie als vorzügliche Weichmachersperre wirken, und durch gute Haftung, Trocken- und Naßreibechtheit auszeichnen. Auch gegen wäßrigen Alkohol sind sie in überraschender Weise gut beständig.

Als Aufbaukomponenten der Polyurethane, die den erfindungsgemäßen Beschichtungs- und Zurichtmitteln zugrunde liegen, eignen sich eine große Anzahl von prinzipiell bekannten Polyurethanrohstoffen.

A) Erfindungsgemäß werden mindestens 2 höhermolekulare Polyhydroxylverbindungen (A/1 und A/2) mit unterschiedlichem Molekulargewicht und definierter Struktur zur Polyurethanherstellung als Makrodiole eingesetzt. Grundsätzlich geeignet sind Makrodiole, d. h. Polyhydroxylverbindungen mit einer mittleren Hydroxyl-Funktionalität von etwa 1,8 bis 2,2, vorzugsweise von 1,95 bis 2,05. In Frage kommen insbesondere Polyester, Polyether und Polycarbonate. Die unterschiedliche Molekulargewichte aufweisenden Polyhydroxylverbindungen A/1 und A/2 werden im Molverhältnis von 1 : 6 bis 6 : 1, bevorzugt 1 : 3 bis 3 : 1 zur Herstellung der Polyurethanharnstoffe eingesetzt.

A/2) Die Makrodiole A/2 mit einem mittleren Molekulargewicht von 1200 bis 3000 können beliebige Polyether, Polyester und Polycarbonate mit der o.g. mittleren Hydroxylfunktionalität sein. Die erfindungsgemäß hierzu in Frage kommenden, Hydroxylgruppen aufweisenden Polyether sind solche der an sich bekannten Art und werden z. B. durch Polymerisation von cyclischen Ethern wie Ethylenoxid, Propylenoxid, Butylenoxid, Tetrahydrofuran, Styroloxid oder Epichlorhydrin mit sich selbst, z. B. in Gegenwart von $BF_3$, oder durch Anlagerung dieser Ringverbindungen, gegebenenfalls im Gemisch oder nacheinander, an Startkomponenten mit reaktionsfähigen Wasserstoffatomen wie Alkohole, Amine, z. B. Wasser, Ethylenglykol, Propylenglykol-1,2 oder -1,3 oder 4,4'-Dihydroxydiphenylpropan, hergestellt.

Als Hydroxylgruppen aufweisende Polycarbonate kommen solche der an sich bekannten Art in Betracht, die z. B. durch Umsetzung von Diolen wie Propandiol-1,3, Butandiol-1,4 und/oder Hexandiol-1,6, Di-, Tri- und/oder Tetraethylenglykol mit Diarylcarbonaten, z. B. Diphenylcarbonat, oder Phosgen hergestellt werden können, vorzugsweise Polycarbonate auf Basis von Hexandiol-1,6, sowie gegebenenfalls modifizierend wirkenden Co-Diolen in untergeordneten Mengen (ca. 5 bis 35 Mol-% der Diole), z. B. Butandiol-1,4 oder Diethylenglykol. Auch Polycarbonate auf Basis von $HO(CH_2)_6 \cdot O \cdot CO \cdot (CH_2)_5 \cdot OH$ sind geeignet.

Die in Frage kommenden, Hydroxylgruppen aufweisenden Polyester sind z. B. Umsetzungsprodukte von mehrwertigen, vorzugsweise zweiwertigen und gegebenenfalls zusätzlich dreiwertigen Alkoholen mit mehrwertigen, vorzugsweise zweiwertigen Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden.

3

Die Polycarbonsäuren können aliphatischer, cycloaliphatischer, aromatischer und/oder heterocyclischer Natur sein und gegebenenfalls, z. B. durch Halogenatome, substituiert und/oder ungesättigt sein. Als Beispiele hierfür seien genannt:

Bernsteinsäure, Adipinsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, di- und trimere Fettsäuren, Terephthalsäuredimethylester, Terephthalsäure-bis-glykolester.

Als mehrwertige Alkohole kommen z. B. Ethylenglykol, Propylenglykol-(1,2) und -(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Hexantriol-(1,2,6), Butantriol-(1,2,4), Trimethylolethan, Pentaerythrit, Chinit, Mannit und Sorbit, Methylglykosid, ferner Di-, Tri und/oder Tetraethylenglykol, -propylenglykol oder Poly-ethylenglykol oder -propylenglykol, Di-, Tri und Tetrabutylenglykole und Polybutylenglykole in Frage. Die Polyester können anteilig endständige Carboxylgruppen aufweisen. Besonders bevorzugt sind Copolyester auf Hexandiol-1,6-Basis, z. B. ein Adipinsäure-Hexandiol-1,6/Neopentylglykol-Polyester (Diol-Molverhältnis 55 : 45 bis 80 : 20; Molekulargewicht 1600–2100).

Auch Polyester aus Lactonen, z. B. $\varepsilon$-Caprolacton oder Hydroxycarbonsäuren, z. B. $\omega$-Hydroxycapronsäure, sind einsetzbar, vorzugsweise solche die auf Diethylenglykol gestartet sind.

A/1) Die relativ kurzkettigen, 6-Ring-haltigen Makrodiole A/1 mit dem mittleren Molekulargewicht von 254 bis 650 können Polyether, Polyester oder Polycarbonate sein. Sie müssen erfindungsgemäß mindestens einen aromatischen, cycloaliphatischen, nämlich Cyclohexan-, oder ungesättigten Ring, nämlich Cyclohexenring, enthalten. Sie haben ebenfalls eine Hydroxylfunktionalität von 1,8 bis 2,2, bevorzugt von 1,95 bis 2,05, sind also im wesentlichen bifunktionell. Die erfindungsgemäßen Polyether in diesem kurzkettigen Molekulargewichtsbereich enthalten als Startermolekül cyclische Substanzen wie Bisphenole, z. B. seien genannt: Hydrochinon, Resorcin und 4,4'-Dihydroxy-diphenylpropan. Auf die Startermoleküle werden Propylenoxid, Ethylenoxid, Butylenoxid, Styroloxid und/oder Epichlorhydrin einzeln, im Gemisch oder in Sequenz addiert unter Bildung von OH-Endgruppen-haltigen Polyethern. Pro Reaktivgrupe (z. B. OH) der Startermoleküle soll zumindest eine Hydroxyethergruppierung addiert sein. Als Polyether bevorzugt verwendet werden auf 4,4'-Dihydroxy-diphenylpropan gestartete Polyether, besonders bevorzugt solche auf Basis von Propylenoxid in einem Molekulargewichtsbereich von 350 bis 600.

Als Polyester kommen hauptsächlich solche in Frage, die aus cyclischen Carbonsäuren aufgebaut sind, wie z. B. auf Basis von Orthophthalsäure oder Orthophthalsäureanhydrid, Isophthalsäure, Terephthalsäure, Hexahydroterephthalsäure, Tetrahydrophthalsäure, Hexahydroterephthalsäure. Polyester auf der Basis dieser Säuren werden bevorzugt eingesetzt. Aber auch die anderen Säuren, die bereits zur Herstellung der Polyester A/2 angeführt werden, können gleichfalls zur Modifizierung verwendet werden. Besonders bevorzugt sind Ethandiol-Polyester der Phthalsäure vom Molekulargewicht 350 bis 600.

Als Hydroxylgruppen aufweisende Polycarbonate kommen z. B. solche in Betracht, die cyclische Diole enthalten, z. B. 1,4-Hydrochinonbishydroxyethylether oder 4,4'-Diphenylpropan-bishydroxypropyl-ether. Besonders bevorzugt werden Polycarbonate aus $\beta$-1,4-Dimethylolcyclohexan im Molekulargewichtsbereich von 350 bis 600.

B) Zur Herstellung der erfindungsgemäßen Polyurethan-Zurichtmittel werden weiterhin sogenannte Kettenverlängerer b) eingesetzt. Als solche können anteilsweise niedermolekulare Diole und gegebenenfalls anteilsweise (bis max. 10 Mol-%) Triole verwendet werden. Genannt seien beispielhaft Ethandiol, Butandiol-1,3, Butandiol-1,4, Hexandiol-1,6, Trimethylolpropan und Glycerin. Aber auch andere Polyole, wie sie für die Polyurethanherstellung als Kettenverlängerungsmittel, beispielsweise in der DE-A-2 854 384 beschrieben werden, können Verwendung finden.

Erfindungswesentlich sind die Diamine, die zu mindestens 50 Mol-% der Kettenverlängerungsmittel B) Verwendung finden. Als Diaminverbindungen kommen Hydrazin und/oder aliphatische Diamine, z. B. Ethylendiamin, Propylendiamin, Hexamethylendiamin-1,6, Decamethylendiamin-1,10 oder andere aliphatische Diamine in Frage, wie sie in der DE-A-2 854 384 beschrieben werden. Als cycloaliphatische Diamine kommen 1,4-Bis-aminomethylcyclohexan, 4,4'-Diamino-3,3'-dimethyl-dicyclohexylmethan und andere ($C_1$—$C_4$)-Di- und Tetraalkyl-dicyclohexylmethane, z. B. 4,4'-Diamino-3,5-diethyl-3',5'-diisopropyldicyclohexylmethan in Frage, bevorzugt werden jedoch 1-Amino-3,3,5-trimethyl-5-aminomethylcyclohexan und 4,4'-Diamino-dicyclohexylmethan und/oder Hydrazin verwendet. In geringen Mengen (weniger als etwa 10 Mol-% der Kettenverlängerer) können auch Triamine, wie z. B. Diethylentriamin oder 1,6,11-Undecantriamin verwendet werden. Innerhalb der Kettenverlängerungsmittel B) müssen mindestens 50 Mol-% Diamin-Kettenverlängerungsmittel, bevorzugt 75 bis 100% Diamin-Kettenverlängerungsmittel sein, wobei Diamine cycloaliphatischer Struktur besonders bevorzugt sind. Sowohl die Diol- wie auch die Diamin-Kettenverlängerer können jeweils Gemische von Diolen bzw. Diaminen darstellen.

Es werden pro Mol Makrodiolgemisch A/1 plus A/2 etwa 0,5 bis 11 Mol an Kettenverlängerern oder deren Gemischen, vorzugsweise 0,8 bis 7,5 Mol, besonders bevorzugt 1,2 bis 4,5 Mol, eingesetzt.

4

**0 073 389**

Üblicherweise verwendet man etwa äquivalente Mengen an Kettenverlängerern, bezogen auf (verbleibendes) Isocyanat, unter Abzug des mit dem Makrodiolgemisch umgesetzten Isocyanatanteils. Vorzugsweise wird jedoch weniger als die äquivalente Menge, bis herab zu etwa 80% der NCO-Gruppen, eingesetzt. Die verbleibenden NCO-Gruppen können entweder mit monofunktionellen Abbrechern wie Butylamin, Stearylamin, 4-Amino-2,2,6,6-tetramethyl-piperidin oder Morpholin oder vorzugsweise mit monofunktionellen Alkoholen (die als Lösungsmittel für Polymere im Überschuß vorliegen), z. B. Isopropanol, umgesetzt werden. Dies verhindert ein zu großes Anwachsen des Molekulargewichts bzw. von Vernetzungs- und Verzweigungsreaktionen.

C) Als Diisocyanate C) kommen überwiegend cycloaliphatische Diisocyanate in Frage, wobei bevorzugt zu mindestens 75 Mol-% das 1-Isocyanato-3,3,5-trimethyl-5-isocyanatomethyl-cyclohexan und/oder 4,4'-Diisocyanato-dicyclohexylmethan verwendet werden. Es sind aber auch geeignet Cyclobutan-1,3-diisocyanat, Cyclohexan-1,3- und -1,4-diisocanat, 1,4-Bis-isocyanatomethyl-cyclohexan, 2,4- und 2,6-Hexahydro-toluylendiisocyanat, Hexahydro-1,3- und/oder -1,4-xylylendiisocyant, 2,4'- und 2,2'-Dicyclohexylmethandiisocyanat, sowie beliebige Gemische der Stellungs- und/oder Stereoisomeren der cycloaliphatischen Diisocyanate.

Die Mitverwendung von kettenaliphatischen und aromatischen Diisocyanaten ist ebenfalls möglich, wobei bis zu 50 Mol-%, vorzugsweise bis zu 25 Mol-% der cycloaliphatischen Diisocyanate durch kettenaliphatische oder aromatische Diisocyanate ersetzt werden können. Wegen der Verfärbungstendenz von Polyurethanen auf Basis aromatischer Diisocyanate sind letztere weniger bevorzugt. Zu den geeigneten Diisocyanaten aus diesen beiden Klassen gehören: 1,4-Tetramethylendiisocyanat, 1,6-Hexamethylendiisocyanat, 1,12-Dodecandiisocyanat, Lysinalkylesterdiisocyanat, oder als aromatische Diisocyanate 2,4- und 2,6-Toluylendiisocyanat und beliebige Gemische dieser Isomeren, Diphenylmethan-2,4'- und/oder -4,4'- und/oder -2,2'-diisocyanat und symmetrische oder unsymmetrische substituierte mono- bis tetraalkylsubstituierte $C_1 - C_4$-Alkyl-Diphenylmethan-diisocyanate.

Zur Herstellung der erfindungsgemäßen Polyurethanharnstoff-Zurichtmittel werden je Mol Makrodiolgemisch A) mindestens 2 Mol bis etwa 12 Mol, bevorzugt bis etwa 8,5 Mol, besonders im Bereich von 2,2 bis 5 Mol, Polyisocyanat verwendet. Üblicherweise sind mindestens 90% der Polyisocyanate Diisocyanate, — mehr als 2funktionelle Polyisocyanate (bis Triisocyanate) können gegebenenfalls bis zu etwa 10 Mol-% verwendet werden.

Makrodiolgemisch und Polyisocyanate werden in der Schmelze oder in Lösung miteinander umgesetzt, bis alle Hydroxylgruppen verbraucht sind. Dann werden weitere Lösemittel zugesetzt und das gegebenenfalls gelöste Kettenverlängerungsmittel zugegeben.

Eine zweite Möglichkeit besteht darin, zu der Schmelze des NCO-Präpolymeren, das aus Makrodiolgemisch und Polyisocyanaten gebildet wurde, in einer geeigneten Mischmaschine, z. B. in einem Extruder, den Kettenverlängerer zuzumischen und as Polyurethan auf diese Weise als Feststoff zu gewinnen.

Eine dritte Möglichkeit besteht darin, einen Teil des Kettenverlängerungsmittels schon bei der Umsetzung von Makrodiolgemisch mit dem Polyisocyanat zuzugeben. Das ist aber nur möglich, wenn dieses Kettenverlängerungsmittel ein niedermolekulares Diol oder Triol ist. Die weitere Kettenverlängerung geschieht dann mit einem Polyamin in Lösung oder Schmelze. Die Herstellung der erfindungsgemäßen Zurichtmittel wird in den folgenden Beispielen eingehender beschrieben.

Als Lösemittel für die Herstellung und die Anwendung der erfindungsgemäßen Polyurethanharnstoff-Zurichtmittel kommen Kohlenwasserstoffe, Ester, Ketone, Alkohole und cyclische Ether in Frage. Genannt seien beispielhaft Toluol, Xylol, Cyclohexan, Ethylacetat, Butylacetat, Methyl- und Ethylglykolacetat, Aceton, Methylethylketon und Methylisobutylketon. Als Alkohole kommen in Frage Ethanol, n-Propanol, iso-Propanol, n-Butanol, iso-Butanol, tert.-Butanol und Ethylglykol. Die Alkohole dienen gleichzeitig dazu, die Endviskosität der Polyurethanharnstoff(lösungen) zu regeln. Dazu können auch Amine wie Dimethylamin, Di-n-butylamin oder 1-Diethylamino-3-amino-propan verwendet werden. Als Lösungsmittel bevorzugt sind Gemische aus relativ unpolaren und relativ polaren Lösungsmitteln, z. B. aromatischen Kohlenwasserstoffen (wie Toluol, Xylol oder höhere aromatische Kohlenwasserstoffe) mit Alkoholen, Estern, Ethern, vorzugsweise primären, sekundären und tertiären Alkoholen, wie Ethanol, Isopropanol, Isobutanol oder tert.-Butanol. Diese Gemische können weiterhin Lösungsmittel wie aliphatische Kohlenwasserstoffe, Ketone, Ester oder cylische Ether enthalten.

Bei der Umsetzung der Polyisocyanate können die bekannten Katalysatoren mitverwendet werden, wie z. B. tertiäre Amine, Metallsalze wie Zinndioctoat, Bleiacetat und Kaliumacetat, sowie metallorganische Verbindungen wie Dibutylzinn-(IV)-dilaurat. Die erfindungsgemäßen Polyurethane können auch in stark polaren Lösemitteln mit Dimethylformamid und N-Methyl-pyrrolidon hergestellt und angewendet werden, jedoch ist dies nicht bevorzugt. Vorzugsweise und vorteilhaft werden die vorher genannten wenig polaren Lösungsmittel bzw. die Lösungsmittelgemische aus aromatischen Kohlenwasserstoffen und Alkoholen benutzt. In diesen Lösemitteln sind die erfindungsgemäßen Polyurethanharnstoffe sehr gut löslich.

Die erfindungsgemäßen Polyurethanharnstoffe besitzen Schmelzpunkte über 100°C, vorzugsweise 130 bis 220°C. Sie besitzen eine hohe Oberflächenhärte, hohe Reißdehnung und Reißfestigkeit.

Sie können in 5 bis 60%iger, vorzugsweise in 10- bis 40%iger Lösung angewendet werden.

Die mit den erfindungsgemäßen Polyurethanharnstoffen hergestellten Zurichtmittel können auf

5

Leder und Lederaustauschstoffen mit poröser oder kompakter Oberfläche aufgebracht werden. Der Auftrag kann durch Drucken, Spritzen, Rakeln oder über eine Transferzurichtung erfolgen. Von besonderer Bedeutung sind die erfindungsgemäßen Polyurethanharnstoffe zur Herstellung von Beschichtungsartikeln auf textilen Unterlagen nach dem Transferverfahren.

Hierbei werden die erfindungsgemäßen Polyurethanharnstoffe als Vordeckstriche oder Deckstriche eingesetzt. Zur Weicheinstellung oder Elastifizierung der erfindungsgemäßen Polyurethane können weniger harte Einkomponentenpolyurethane üblicher Bauart, z. B. solche aliphatischer Natur, mitverwendet werden.

Die Vordeckstriche oder Deckstriche, in einer Auflage von 5 bis 30 g/m², können als Zwischen- oder Deckstrichaufbau mit geschäumten oder kompakten Polyurethan- oder PVC-Schaum kombiniert werden, z. B. Deckstriche aus dem erfindungsgemäßen Polyurethanharnstoff, Haftstriche aus PVC-Schaum oder Vordeckstriche aus dem erfindungsgemäßen Polyurethanharnstoff, Deckstriche aus einem aromatischen Einkomponentenpolyurethan, Haftstriche aus einem aromatischen Einkomponentenpolyurethan.

Übliche Zusatzstoffe und Hilfsmittel wie Griffmittel, Pigmente, Farbstoffe, Mattierungsmittel, UV-Stabilisatoren, phenolische Antioxidantien, Lichtstabilisatoren, Hydrophobierungsmittel und/oder Verlaufmittel können mitverwendet werden.

Die mit den erfindungsgemäßen Polyurethanharnstoffen erhaltenen Zurichtungen haben Echtheitseigenschaften, die bei der Verwendung von Einkomponentenpolyurethanen der sonst üblichen Art nicht erzielbar sind bzw. nur erreichbar sind, wenn Polyurethane, die nur in stark polaren Lösemitteln wie DMF löslich sind, eingesetzt werden. Besonders vorteilhaft sind die hohe Härte und Knickelastizität.

Die Beschichtungen und Zurichtungen mit den erfindungsgemäßen Polyurethanharnstoffen zeichnen sich auch noch besonders durch ihre ausgezeichnete Weichmachersperre aus. Sie verhindern in vorzüglicher Weise die Wanderung von Weichmachern und das Ausbluten von Farbstoffen. Sie sind auch sehr gut beständig gegen Reinigungsmittel und vor allem auch gegen wäßriges Ethanol.

Diese Vorteile der erfindungsgemäßen Polyurethanharnstoffe werden durch Vergleichsversuche in den folgenden Beispielen dargelegt.

In den Beispielen kommen die folgenden Makrodiole zur Verwendung:


Polyol I

Hydroxylpolyester aus Adipinsäure und Diethylenglykol mit einem mittleren Molgewicht von 2540 und der Hydroxylzahl 49.


Polyol II

Polyester aus o-Phthalsäure und Ethandiol mit einem mittleren Molgewicht von 400 und der Hydroxylzahl 280.


Polyol III

Polyester aus Adipinsäure, Hexandiol und Neopentylglykol mit dem mittleren Molgewicht 1700 und einem Hydroxylgehalt von 2,0%.


Polyol IV

Propylenoxid-polyester, der als Startermolekül 4,4-Dihydroxy-diphenyl-propan enthält; OH-Zahl 200 und mittleres Molgewicht 550.

Polyol V

Polyester aus Adipinsäure und Butandiol-1,4 mit dem mittleren Molgewicht 2250 und der Hydroxylzahl 50.


Polyol VI

Polycarbonat aus Hexandiol-1,6, hergestellt mit Diphenylcarbonat, mit der Hydroxylzahl 56 und dem mittleren Molgewicht 2000.

6

# 0 073 389

Polyol VII

Polyester aus Adipinsäure und Hexandiol-1,6 (Molgewicht 840 und einem OH-Gehalt von ca. 4,0%.

## Beispiel 1

Dieses Beispiel beschreibt die Herstellung eines erfindungsgemäßen Polyurethanharnstoffs in Lösung.

216 g Polyol III und 76 g Polyol II werden mit 205 g 1-Isocyanatomethyl-5-isocyanato-1,3,3-trimethylcyclohexan (IPDI) vermischt und bei 80° C bis zu einem konstanten NCO-Gehalt von 10,2% umgesetzt. Man läßt danach auf Raumtemperatur abkühlen, verdünnt mit 600 g Toluol, gibt zu der Lösung noch 400 g Isopropanol und fügt dann nach und nach eine Lösung von 103 g 1-Aminomethyl-5-amino-1,3,3-trimethylcyclohexan (IPDA) und 200 g Isopropanol zu und verdünnt schließlich noch mit 200 g Ethylglykol.

Man erhält 2000 g einer 30%igen Polyurethanharnstofflösung in Toluol/Isopropanol/Ethylglykol mit einer Viskosität von 14 000 mPa · s bei 25° C.

## Beispiel 2

Auch dieses Beispiel beschreibt die Zusammensetzung eines erfindungsgemäßen Polyurethanharnstoffs.

Die Herstellung erfolgt wie in Beispiel 1 angegeben. Das Polyurethan hat die folgende Zusammensetzung:

1 Mol Polyol I
5 Mol Polyol IV
14 Mol IPDI und ca.
8 Mol Hydrazinhydrat.

Man erhält eine 30%ige Lösung in Toluol/Isopropanol 29 : 41 mit einer Viskosität von ca. 5000 mPa · s/25° C.

## Beispiel 3 (Vergleichsbeispiel)

Dieses Beispiel gibt die Zusammensetzung eines sehr hochwertigen alipahtischen Polyurethans an, das mit den erfindungsgemäßen Polyurethanen verglichen und kombiniert werden soll. Die Herstellung erfolgt wie in Beispiel 1. Das Polyurethan besteht aus

1 Mol Polyol VI
2,4 Mol IPDI
1,4 Mol IPDA

Es ist 30%ig in Isopropanol/Toluol/Ethylglykol 21 : 29 : 20 und hat eine Viskosität von 15 000 mPa · s.

## Beispiel 4 (Vergleichsbeispiel)

Zusammensetzung eines üblichen Polyurethans, das aus einem Diol mit niedrigem Molgewicht besteht und im allgemeinen nach dem Stand der Technik für Finishanwendungen eingesetzt wird. Die Herstellung erfolgt wie in Beispiel 1 angegeben.

Zusammensetzung:

1 Mol Polyol VII
2,4 Mol IPDI
1,4 Mol IPDA

Die 25%ige Lösung in Isopropanol/Toluol 1 : 1 hat eine Viskosität von 10 000 mPa · s.

7

**0 073 389**

### Beispiel 5 (Vergleichsbeispiel)

Dieses Beispiel gibt die Zusammensetzung eines Polyurethans an, das nach dem Stand der Technik für trockene Deckstriche Verwendung findet.

Zusammensetzung:

| | |
|---|---|
| 1 Mol | Polyol V |
| 3,2 Mol | IPDI |
| 2,2 Mol | IPDA |

Die Lösung ist 25%ig in Toluol/Isopropanol/MGA 37 : 13 : 50, mit einer Viskosität von 8000 mPa · s.

### Beispiel 6 (Vergleichsbeispiel)

Dieses Beispiel gibt ein aromatisches Polyurethan an, das für trockene Deckstriche mit gutem Griff geeignet ist. Die Herstellung erfolgt in Lösung aus den Bestandteilen

| | |
|---|---|
| 1 Mol | Polyol V |
| 3 Mol | Butandiol-1,4 |
| 4 Mol | Diphenylmethandiisocyanat |

Die Lösung ist 30%ig in Dimethylformamid/Methylethylketon 3 : 2.

### Beispiel 7 (Vergleichsbeispiel)

Dieses Beispiel gibt die Zusammensetzung eines aromatischen Polyurethans vom Stand der Technik an, das in Tetrahydrofuran gelöst ist und bei der Anwendung kein Dimethylformamid benötigt.

Zusammensetzung:

| | |
|---|---|
| 1 Mol | Polyol V |
| 8,4 Mol | Neopentylglykol |
| 0,2 Mol | Trimethylolpropan, etwa |
| 10,1 Mol | 4,4'-Diisocyanatodiphenylmethan |

Das Produkt wird durch Polyaddition in Tetrahydrofuran hergestellt. Es ist 20%ig gelöst und hat in Lösung eine Viskosität von 3800 mPa · s bei 25°C.

### Beispiel 8

Dieses Beispiel beschreibt die Herstellung eines beschichteten textilen Materials, das für Täschnerwaren geeignet ist. Der erfindungsgemäße Polyurethanharnstoff aus Beispiel 1 wird hierbei mit dem Polyurethan vom Stand der Technik aus Beispiel 3 kombiniert. Diese Kombination wird verglichen mit dem reinen Polyurethan aus Vergleichsbeispiel 3 und den Polyurethanen vom Stand der Technik aus den Vergleichsbeispielen 5 und 6.

### Beispiel 8a

Zur Herstellung des Täschnermaterials wird auf ein flachgeprägtes PVC-Trennpapier nach der Transferbeschichtungstechnik ein Deckstrich gerakelt, der nach Passage eines 70°C heißen Trockenkanals ein Gewicht von ca. 20 g/m² hat.

Die Deckstrichpaste besteht aus 700 g der in Beispiel 1 beschriebenen erfindungsgemäßen PUR-Lösung und 300 g der in Beispiel 3 beschriebenen PUR-Lösung, die mit Toluol/Isopropanol 1 : 1 auf 25% Feststoffgehalt verdünnt wurden.

Der Streichpaste werden ferner als Hilfsmittel 20 g einer 30%igen Lösung von Celluloseacetobutyrat in Methylethylketon und 10 g einer 50%igen Lösung eines Polysiloxans in Toluol zugefügt. Zur Farbgebung werden der Streichpaste 100 g einer handelsüblichen Pigmentpaste einverleibt. Auf den Deckstrich wird in zwei Strichen, zusammen ca. 250 g/m², PVC-Schaumpaste aufgerakelt. Der erste Strich, ca. 170 g/m² schwer, läuft durch einen 120°C heißen Kanal, der zweite Strich, ca. 80 g/m², wird bei 180—190°C nach Einkaschieren eines leicht gerauhten Baumwollgewebes von ca. 150 g/m² geschäumt und geliert.

8

**0 073 389**

### Beispiel 8b

Man verfährt wie oben unter 8a angegeben und stellt eine Deckstrichpaste für geschäumtes PVC mit der auf 25% verdünnten Lösung des Polyurethans aus Vergleichsbeispiel 3 her, und beschichtet mit einer Auflage von ca. 20 g/m².

### Beispiel 8c

Man verfährt wie unter 8a und 8b angegeben und benutzt als Deckstrich das Polyurethan aus Vergleichsbeispiel 5.

### Beispiel 8d

Man verfährt wie unter 8a und 8b angegeben und benutzt zur Herstellung der Deckstrichpaste das Polyurethan aus Vergleichsbeispiel 6. Zum Verdünnen wird Methylethylketon benutzt.

Es werden die verschiedenen Deckstriche auf PVC aus Beispiel 8a bis 8d verglichen, indem sie einer Reibechtheitsprüfung im Crockmeter nach DIN 54 021 unterworfen werden. Bei diesem Test reibt ein Lappen über den Film. Beurteilt wird der Farbabrieb nach Hydrolyselagerung der Proben. Die Beurteilung des Ausblühens erfolgt nach DIN 54 002.

| Deckstriche auf PVC-Schaum | Original sofort nach Herstellung | Hydrolysealterung bei 70° C, 95% rel. Feuchtigkeit | |
|---|---|---|---|
| | | 7 d | 14 d |
| Erfindungsgemäß: | | | |
| Deckstrich 8a | 5 | 4 | 4 |
| Vergleiche: | | | |
| Deckstrich 8b | 5 | 2 | 2 |
| Deckstrich 8c | 5 | 3 | 2 |
| Deckstrich 8d | 5 | 2 | 2 |

(Bewertungsnoten von 5 (gut) bis 1 (schlecht)).

Diese Prüfung zeigt, daß nur mit dem erfindungsgemäßen Polyurethan ein Deckstrich erzielt wird, der praktisch kein Ausblühen von Farbpigment und Weichmacher zeigt. Die Probe zeigt zudem ausgezeichnete Haftung des Polyurethans sowie die beste Trocken- und Naßreibechtheit aller Proben. Auch beim Reiben mit einem mit wäßrigem Alkohol befeuchteten Lappen zeigt die Probe gute Beständigkeit.

### Beispiel 9

Dieses Beispiel beschreibt die Herstellung eines Kunstleders mit Hilfe eines beschichteten Vlieses, das für ein Schuhfutter Verwendung findet. Das erfindungsgemäße Polyurethan aus Beispiel 1 wird hierbei mit den Polyurethanen aus den Vergleichsbeispielen 4 und 7 verglichen.

### Beispiel 9a

Eine Deckstrichpaste bestehend aus 1000 g der in Beispiel 1 beschriebenen erfindungsgemäßen PUR-Lösung, 50 g Toluol und 50 g Isopropanol als Verdünner, 30 g einer handelsüblichen Pigmentpaste und 5 g einer 60%igen Lösung eines Polysiloxans in Toluol werden auf ein PUR- oder PVC-Trennpapier gerakelt. Trocknung erfolgt bei 60 bis 70° C, PUR-Feststoffauflage 15 g/m².

Auf den Deckstrich wird, wie in Beispiel 8a bei der Herstellung eines Täschnermaterials beschrie-

9

ben, in zwei Strichen PVC-Schaumpaste von zusammen ca. 250 g/m² aufgerakelt. Nach Einkaschieren eines Vlieses in den zweiten PVC-Schaumpastenstrich wird bei 180—190°C in etwa 1,5 min geschäumt und geliert.

## Beispiel 9b

Man verfährt wie oben unter 9a angegeben und stellt eine Deckstrichpaste mit der Polyurethanlösung aus Vergleichsbeispiel 4 her und beschichtet mit einer Auflage von ca. 15 g/m².

## Beispiel 9c

Man verfährt wie unter 9a angegeben und stellt eine Deckstrichpaste mit der Polyurethanlösung des Vergleichsbeispiels 7 her. Zum Verdünnen der Lösung benutzt man Tetrahydrofuran. Man beschichtet das geschäumte PVC mit einer Auflage von 15 g/m².

Es werden die verschiedenen Deckstriche 9a bis 9c auf dem PVC-Kunstleder verglichen, indem sie einer Reibechtheitsprüfung im Crockmeter nach DIN 54 021 unterworfen werden.

Die Beurteilung des Ausblühens erfolgt nach DIN 54 002.

| Deckstriche auf PVC-Schaum | Original sofort nach Herstellung | Hydrolysealterung bei 70°C, 95% rel. Luftfeuchtigkeit | |
|---|---|---|---|
| | | 7 d | 14 d |
| Erfindungsgemäß: | | | |
| Deckstrich 9a | 5 | 5 | 4 |
| Vergleiche: | | | |
| Deckstrich 9b | 5 | 2 | 2 |
| Deckstrich 9c | 5 | 3 | 3 |

Auch aus diesen Vergleichsprüfungen wird ersichtlich, daß das erfindungsgemäße Beispiel praktisch kein Ausblühen zeigt und deshalb zur Herstellung eines Kunstleders am besten geeignet ist.

## Beispiel 10

Dieses Beispiel beschreibt die Herstellung von Finish-Lösungen mit den erfindungsgemäßen Polyurethanen und die Zurichtung eines PUR-Kunstleders und von Leder mit diesen Lösungen durch Rastern (Druckwalze) und Spritzen.

Lösung zum Rastern: 1000 g der nach Beispiel 2 hergestellten erfindungsgemäßen PUR-Lösung werden mit 250 g Isopropanol, 225 g Toluol, 25 g Ethylglykol und 30 g Cyclohexanon verdünnt.

Lösung zum Spritzen: 1000 g der nach Beispiel 2 hergestellten PUR-Lösung werden mit 200 g Isopropanol, 1800 g Toluol und 260 g Ethylglykol verdünnt.

Mit den Lösungen wurden vergleichende Zurichtungen auf einem Polyurethankunstleder (durch Rastern) und auf einem Schleifbox-Rindleder (durch Spritzen) durchgeführt, bis sich ein dünner Film gebildet hatte. Dann wurde mit einer 100°C heißen Bügelplatte unter Druck abgebügelt und mit einem Satra-Reibgerät die Trockenreibechtheit geprüft. Beide Proben zeigten keine Bügelklebrigkeit. Bei 3000 Umdrehungen im Reibgerät treten keine Beschädigungen auf.

## Beispiel 11

In diesem Beispiel wird die Quellung unpigmentierter Filme der erfindungsgemäßen Polyurethanharnstoffe in handelsübliche PVC-Weichmacher untersucht. Dabei werden die erfindungsgemäßen Polyurethane mit Polyurethanen vom Stand der Technik verglichen. Die Volumenzunahme der Filme nach 7 Tagen Lagerung im PVC-Weichmacher wird gemessen und in Prozent des Nullwertes angegeben.

**0 073 389**

Volumenzunahme der Filme nach 7 Tagen Lagerung in handelsüblichen Weichmachern

| Produkt | Diphenyloctyl-phosphat | Benzylbutyl-phthalat | $C_{10}-C_{20}$-Alkyl-sulfonsäure-phenylester | Dioctyl-phthalat |
|---|---|---|---|---|
| **Erfindungsgemäß:** | | | | |
| PUR aus Beispiel 1 | 85% | 75% | 10% | 10% |
| PUR aus Beispiel 2 | 90% | 80% | 10% | 10% |
| PUR aus Beispiel 1 und Beispiel 3, 8 : 2 gemischt | 130% | 100% | 15% | 10% |
| PUR aus Beispiel 1 und Beispiel 3, 6 : 4 gemischt | 140% | 130% | 15% | 15% |
| **Vergleiche:** | | | | |
| PUR aus Beispiel 4 | 340% | 250% | nicht gemessen | 35% |
| PUR aus Beispiel 6 | 300% | 310% | nicht gemessen | 40% |
| PUR aus Beispiel 5 | 280% | 310% | nicht gemessen | 30% |
| PUR aus Beispiel 7 | 185% | 240% | nicht gemessen | 40% |
| PUR aus Beispiel 3 | 395% | 545% | 80% | 40% |

Diese Messungen zeigen, daß die Filme der erfindungsgemäßen Polyurethanharnstoffe in Weichmachern nur verhältnismäßig wenig quellen. Sie zeigen auch, daß die erfindungsgemäßen Polyurethane in Abmischung mit Polyurethanen vom Stand der Technik — vorausgesetzt es entstehen verträgliche Mischungen, d. h. ungetrübte, klare Filme — diesen ebenfalls verbesserte (geringere) Quellwerte verleihen. Der erhebliche Vorteil der geringen Quellung in Weichmachern ist ein Zeichen für die gute Eignung der erfindungsgemäßen Polyurethane für die Beschichtung von PVC-Kunstleder.

**Patentansprüche**

1. Beschichtungsmittel und Zurichtmittel für Leder und Lederaustauschstoffe auf der Grundlage von linearen bzw. wenig verzweigten, thermoplastischen Polyurethanharnstoffen, die aus Diisocyanaten, Makrodiolen, und Kettenverlängerern wie Diaminen und gegebenenfalls Triaminen, Diolen und/oder Triolen, und gegebenenfalls Kettenabbrechern aufgebaut sind, dadurch gekennzeichnet, daß man Polyurethanharnstoffe verwendet, die aufgebaut sind

A)  aus mindestens 2 Makrodiolen im Molverhältnis 1 : 6 bis 6 : 1, von denen das eine

  1.  ein mittleres Molekulargewicht von 254 bis 650 hat und mindestens einen Benzol-, Cyclohexan- oder Cyclohexenring enthält, und
  2.  das zweite Makrodiol ein mittleres Molgewicht im Bereich von 1200 bis 3000, mindestens aber ein 3faches Molgewicht von A/1 besitzt,

und die

B)  pro Mol Makrodiolgemisch 0,5 bis 11 Mol Kettenverlängerer enthalten, wobei mindestens 50 Mol-% der verwendeten Kettenverlängerer aliphatische und/oder cycloaliphatische Diamine und/oder Hydrazin sind,

und bei denen

C)  als Diisocyanate in einer Menge von 2 bis 12 Mol C) pro Mol A) cycloaliphatische Diisocyanate

11

eingesetzt werden, welche gegebenenfalls durch bis zu 50 Mol-% aliphatische und/oder aromatische Diisocyanate ersetzt sein können.

2. Beschichtungsmittel nach Anspruch 1, dadurch gekennzeichnet, daß als relativ kurzkettige, 6-Ring-haltige Makrodiole A/1 solche mit einem Molekulargewicht von 350 bis 600 verwendet werden.

3. Beschichtungsmittel nach Anspruch 1 und 2, dadurch gekennzeichnet, daß die Makrodiole A/1 und A/2 im Molverhältnis 1 : 3 bis 3 : 1 verwendet werden.

4. Beschichtungsmittel nach Anspruch 1 bis 3, dadurch gekennzeichnet, daß die relativ kurzkettigen, 6-Ring-haltigen Makrodiole A/1 Ethandiol-Polyester der Phthalsäure, auf 4,4'-Dihydroxy-diphenylpropan gestartete Polyether auf Basis von Propylenoxid oder Polycarbonate aus 1,4-Dimethylolcyclohexan sind.

5. Beschichtungsmittel nach Anspruch 1 bis 4, dadurch gekennzeichnet, daß sie pro Mol Makrodiol-Gemisch A) 0,8 bis 7,5 Mol Kettenverlängerer B) enthalten.

6. Beschichtungsmittel nach Anspruch 1 bis 5, dadurch gekennzeichnet, daß die Kettenverlängerungsmittel B) mindestens 50 Mol-% Diamin-Kettenverlängerungsmittel sind.

7. Beschichtungsmittel nach Anspruch 1 bis 6, dadurch gekennzeichnet, daß pro Makrodiolmischung A) 1,2 bis 4,5 Mol cycloaliphatische Diamin-Kettenverlängerungsmittel und/oder Hydrazin verwendet werden.

8. Beschichtungsmittel nach Anspruch 1 bis 7, dadurch gekennzeichnet, daß sie als Diisocyanate C) mindestens 50 Mol-% cycloaliphatische Diisocyanate enthalten.

9. Beschichtungsmittel nach Anspruch 1 bis 8, dadurch gekennzeichnet, daß sie als Diisocyanate mindestens 75 Mol-% Isophorondiisocyanat und/oder 4,4'-Dicyclohexylmethan-diisocyanat enthalten.

10. Beschichtungsmittel nach Anspruch 1—9, dadurch gekennzeichnet, daß sie als cycloaliphatische Diamin-Kettenverlängerungsmittel 1-Amino-3,3,5-trimethyl-5-aminomethyl-cyclohexan und/oder 4,4'-Diamino-dicyclohexylmethan enthalten.

## Claims

1. Coating agents and finishing agents for leather and leather substitutes, based on linear or slightly branched, thermoplastic polyurethane ureas which are obtained from diisocyanates, macrodiols, and chain lengthening agents such as diamines and optionally triamines, diols and/or triols, and optionally chain stoppers, characterised in that polyurethane ureas are used which are obtained from

A) at least 2 macrodiols in a molar ratio of 1 : 6 to 6 : 1, one of which

1. has an average molecular weight of 254 to 650 and contains at least one benzene, cyclohexane or cyclohexene ring, and
2. the second macrodiol has an average molecular weight in the range from 1200 to 3000, but at least 3 times the molecular weight of A/1,

and which

B) contain 0.5 to 11 mol of chain-lengthening agents per mol of the macrodiol mixture, at least 50 mol % of the chain-lengthening agents used being aliphatic and/or cycloaliphatic diamines and/or hydrazine,

and in which

C) cycloaliphatic diisocyanates which can optionally be replaced by up to 50 mol % of aliphatic and/or aromatic diisocyanates are used as the diisocyanates in a quantity of 2 to 12 mol of C) per mol of A).

2. Coating agents according to Claim 1, characterised in that the relatively short-chain macrodiols A/1 containing 6-membered rings which are used are those with a molecular weight of 350 to 600.

3. Coating agents according to Claims 1 and 2, characterised in that the macrodiols A/1 and A/2 are used in a molar ratio of 1 : 3 to 3 : 1.

4. Coating agents according to Claim 1 to 3, characterised in that the relatively short-chain macrodiols A/1 containing 6-membered rings are ethanediol polyesters of phthalic acid, polyethers based on propylene oxide and started on 4,4'-dihydroxy-diphenylpropane or polycarbonates of 1,4-dimethylol-cyclohexane.

5. Coating agents according to Claim 1 to 4, characterised in that they contain 0.8 to 7.5 mol of chain-lengthening agents B) per mol of the macrodiol mixture A).

6. Coating agents according to Claim 1 to 5, characterised in that at least 50 mol % of the chain-lengthening agents B) are diamine chain-lengthening agents.

7. Coating agents according to Claim 1 to 6, characterised in that 1.2 to 4.5 mol of cycloaliphatic diamine chain-lengthening agents and/or hydrazine are used per macrodiol mixture A).

8. Coating agents according to Claim 1 to 7, characterised in that they contain at least 50 mol % of cycloaliphatic diisocyanates as the diisocyanates C).

9. Coating agents according to Claim 1 to 8, characterised in that they contain at least 75 mol % isophorone diisocyanate and/or 4,4'-dicyclohexylmethane diisocyanate as the diisocyanates.

10. Coating agents according to Claim 1—9, characterised in that they contain 1-amino-3,3,5-trimethyl-1-aminomethyl-cyclohexane and/or 4,4'-diamino-dicyclohexylmethane as the cycloaliphatic diamine chain-lengthening agents.

## Revendications

1. Compositions d'enduction et de finissage pour cuir et produits de remplacement du cuir à base de polyuréthanne-urées thermoplastiques linéaires ou peu ramifiées, qui sont édifiées à partir de diisocyanates, de macrodiols et d'agents d'allongement de chaîne tels que des diamines et, le cas échéant, des triamines, des diols et/ou des triols, et le cas échéant, des agents de terminaison de chaîne,

caractérisées en ce qu'on utilise des polyuréthanne-urées qui sont édifiées

A)   à partir d'au moins 2 macrodiols dans le rapport molaire de 1 : 6 à 6 : 1, dont l'un

　　　1.　a un poids moléculaire moyen de 254 à 650 et comprend au moins un noyau de benzène, de cyclohexane ou de cyclohexène, et
　　　2.　le second macrodiol a un poids moléculaire moyen compris dans l'intervalle de 1200 à 3000, mais possède au moins moléculaire triple de celui de A/1,

et qui

B)   contiennent par mole de mélange de macrodiols 0,5 à 11 moles d'agents d'allongement de chaîne, au moins 50 moles % des agents d'allongement de chaîne utilisés étant des diamines aliphatiques et/ou cycloaliphatiques et/ou l'hydrazine,

et dans lesquelles

C)   on utilise comme diisocyanates en une quantité de 2 à 12 moles de C) par mole de A) des diisocyanates cycloaliphatiques qui peuvent être remplacés le cas échéant par une quantité allant jusqu'à 50 moles % de diisocyanates aliphatiques et/ou aromatiques.

2. Compositions d'enduction suivant la revendication 1, caractérisées en ce qu'on utilise comme macrodiols A/1 à chaîne relativement courte, à noyau hexagonal, des macrodiols ayant un poids moléculaire de 350 à 600.

3. Compositions d'enduction suivant les revendications 1 et 2, caractérisées en ce que les macrodiols A/1 et A/2 sont utilisés dans un rapport molaire de 1 : 3 à 3 : 1.

4. Compositions d'enduction suivant les revendications 1 à 3, caractérisées en ce que les macrodiols A/1 à chaîne relativement courte, contenant un noyau hexagonal, sont des polyesters d'éthanediol de l'acide phtalique, des polyéthers amorcés au 4,4'-dihydroxy-diphénylpropane à base d'oxyde de propylène ou des polycarbonates de 1,4-diméthylolcyclohexane.

5. Compositions d'enduction suivant les revendications 1 à 4, caractérisées en ce qu'elles contiennent par mole de mélange A) de macrodiols 0,8 à 7,5 moles d'agent d'allongement de chaîne B).

6. Compositions d'enduction suivant les revendications 1 à 5, charactérisées en ce que les agents d'allongement de chaîne B) sont des agents diaminés d'allongement de chaîne en proportion d'au moins 50 moles %.

7. Compositions d'enduction suivant les revendications 1 à 6, caractérisées en ce qu'on utilise par mélange A) de macrodiols, 1,2 à 4,5 moles d'agent diaminé cycloaliphatique d'allongement de chaîne et/ou d'hydrazine.

8. Compositions d'enduction suivant les revendications 1 à 7, caractérisées ce qu'elles contiennent comme diisocyanates C) au moins 50 moles % de diisocyanates cycloaliphatiques.

9. Compositions d'enduction suivant les revendication 1 à 8, caractérisées en ce qu'elles contiennent comme diisocyanates, au moins 75 moles % d'isophoronediisocyanate et/ou de 4,4'-dicyclohexylméthane-diisocyanate.

10. Compositions d'enduction suivant les revendications 1 à 9, caractérisées en ce qu'elles contiennent comme agents diaminés cycloaliphatiques d'allongement de chaîne du 1-amino-3,3,5-triméthyl-5-aminométhylcyclohexane et/ou du 4,4'-diaminodicyclohexylméthane.